# FASCICULE DE BREVET EUROPEEN

(11) **EP 0 413 635 B1**
(45) Date de publication et mention de la délivrance du brevet: **18.11.1993**
(21) Numéro de dépôt: 90402297.7
(22) Date de dépôt: 16.08.1990
(51) Int. Cl.: F02K 1/70

(54) **Inverseur de poussée de turboréacteur à portes associées à un panneau amont**
Schubumkehrvorrichtung für ein Strahltriebwerk
Thrust reverser for a jet engine

(30) Priorité: 18.08.1989 FR 8911006
(43) Date de publication de la demande: 20.02.1991
(73) Titulaire: HISPANO-SUIZA Société anonyme dite:, F-92213 Saint Cloud (FR)
(72) Inventeur: Hersen, René, Marie, Joseph, décédé (FR); Lore, Xavier, Raymond, Yves, F-76210 Beuzeville la Grenier (FR)
(74) Mandataire: Moinat, François

(56) Documents cités:
- FR-A- 1 542 477
- FR-A- 2 621 082
- US-A- 3 601 992
- US-A- 3 605 411
- US-A- 3 837 411

## Description

La présente invention concerne un inverseur de poussée de turboréacteur à double flux.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

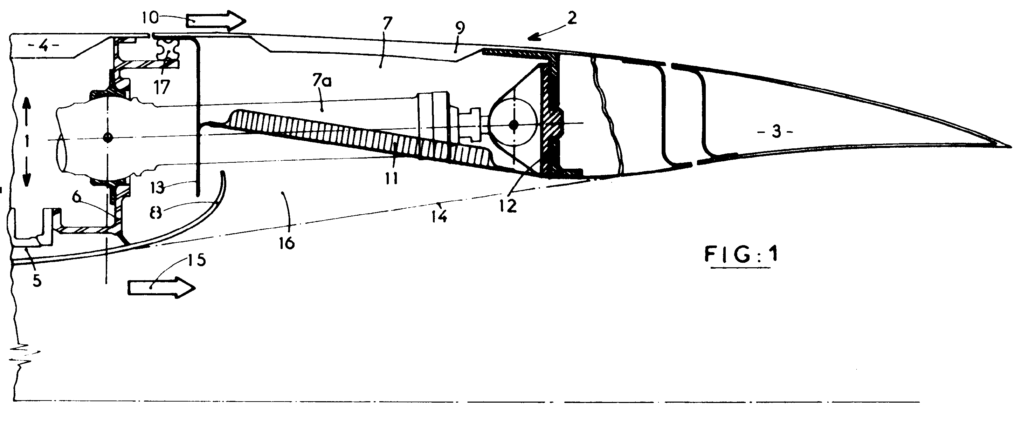

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 limitant extérieurement la veine du flux secondaire et un cadre avant 6 qui assure la jonction desdits panneaux 4 et 5. Ledit cadre avant 6 sert également de support au dispositif de commande des déplacements de la partie mobile 2 qui est essentiellement composée d'un certain nombre d'éléments déplaçables, ou obstacles communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion.

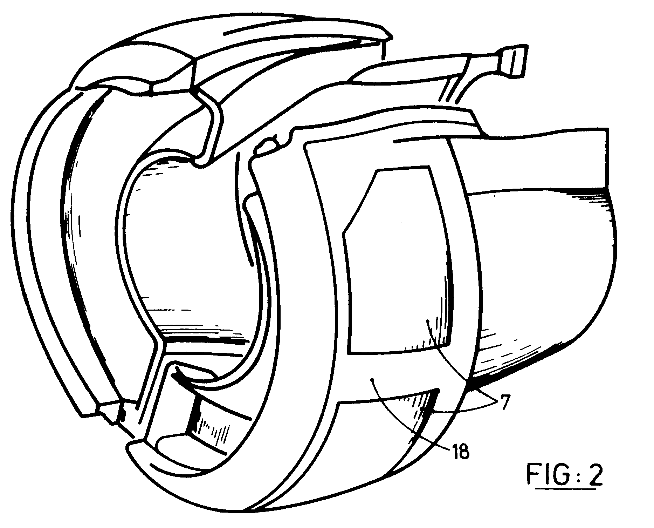

La figure 2 montre, selon une vue schématique en perspective un exemple d'application d'un tel inverseur de poussée à un turboréacteur à double flux, l'inverseur comportant dans ce cas quatre portes 7 et la figure 2 montrant lesdites portes 7, fermées , correspondant à un fonctionnement en poussée directe. Chaque porte 7 est associée à un moyen de commande des déplacements tels qu'un vérin 7a.

En aval de la partie fixe 1, amont et aval étant définis par rapport au sens normal de circulation des gaz en poussée directe, la structure est prolongée par un bord de déviation 8, fixé sous le cadre avant 6 et destiné à assurer une orientation adéquate de l'écoulement, en position d'inversion de poussée. Chaque porte 7 est composée d'un panneau externe 9 venant se placer en position jet direct dans le prolongement du panneau externe 4 de la partie fixe amont 1 pour constituer la paroi aérodynamique continue limitant le flux extérieur au moteur représenté par la flèche 10, d'un panneau interne 11 et d'une structure intérieure formée de raidisseurs 12, assurant la liaison entre les panneaux 9 et 11. La porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte 7 un déflecteur 13 constitué d'une partie frontale associée ou non à des parties latérales. Afin que la porte 7, en position ouverte d'inversion de poussée, assure des performances suffisantes, il est habituellement nécessaire, comme dans l'exemple connu représenté à la figure 1, que la partie avant du panneau interne 11 s'écarte, dans une direction radiale extérieure, d'une surface théorique représentée par la ligne 14, correspondant à une enveloppe théorique de délimitation aérodynamique continue parfaite de la veine du flux secondaire des gaz, représenté par la flèche 15. Une cavité 16 se trouve ainsi formée du côté intérieur de la porte 7 lorsqu'elle se trouve en position fermée correspondant à la poussée directe, délimitée, à l'avant, par le déflecteur 13 de porte et par le bord de déviation 8 de la partie fixe amont 1, du côté externe, par la partie avant du panneau interne 11 de porte et du côté radialement interne, par ladite surface théorique 14. Une partie du flux est forcée par le bord de déviation 8 dans ladite cavité 16, créant ainsi une distorsion du flux et des perturbations dans les écoulements. Il en résulte des pertes aérodynamiques qui sont néfastes au fonctionnement en poussée directe.

D'autres exemples de réalisation du type d'inverseur de poussée de turboréacteur à portes basculantes sont décrits notamment par FR-A 2 486 153, FR-A 2 506 843 et FR-A 2 559 838. Des solutions ont également été proposées pour une amélioration du profil de veine correspondant à une enveloppe aérodynamique de veine correcte en fonctionnement de poussée directe.

Notamment, FR-A 2 621 082 définit une porte d'inverseur comportant une partie interne mobile s'adaptant au profil de veine lors du fonctionnement en poussée directe, masquant ainsi ladite cavité 16, tout en s'escamotant lors du fonctionnement en inversion de poussée pour obtenir les performances requises.

Dans tous ces exemples connus, la porte 7 d'inverseur est munie sur son pourtour de moyens d'étanchéité, notamment sur le bord de son panneau externe 9, comme l'élément 17 représenté sur la figure 1 coopérant avec la partie fixe amont 1 de l'inverseur et de même sur les bords latéraux coopérant avec les poutres 18 visibles sur la figure 2.

Un autre problème concerne le controle du jet inversé lors du fonctionnement en inversion de poussée. FR-A 2559 838 cité ci-dessus a notamment recherché une solution dans divers aménagements apportés à la forme des bords du puits d'inversion dégagé dans le capotage lors de l'ouverture des portes de l'inverseur. On connaît également l'utilisation dans ce but d'un ensemble de déflecteurs associés à chaque porte, tel que le déflecteur frontal 13 représenté sur la figure 1. Toutefois dans certaines applications, ces aménagements antérieurement connus peuvent se révéler insuffisants pour assurer les performances requises.

US-A- 3 601 992 décrit également un inverseur de poussée de turboréacteur dont les portes comportent plusieurs parties reliées par des biellettes, les longueurs de biellettes et les emplacements des pivots respectifs étant déterminés de manière que en position d'inversion de flux et sous l'action d'un vérin de commande des passages sont ménagés entre lesdites parties de porte qui assurent une veine lisse en position de jet direct.

Il est par ailleurs connu, afin d'éviter une ouverture intempestive de porte d'inverseur susceptible de gêner un bon comportement de l'avion en dehors des phases d'approche, d'atterrissage ou de freinage, de prévoir au moyen de dispositifs connus en soi un verrouillage mécanique positif de la porte en position fermée. Il est cependant apparu souhaitable, notamment pour des applications sur appareils bimoteurs à longue distance, d'obtenir une auto-fermeture de la porte quels que soient l'état et la position des dispositifs normaux des fermeture et verrouillage. Par suite, le but de l'invention est d'apporter une solution à ces problèmes en conciliant les facilités de mise en oeuvre, tenant compte des impératifs de masse minimale, d'encombrement réduit qui sont des critères importants dans les applications aéronautiques concernées et de coût réduit, avec l'obtention des performances requises, aussi bien lors du fonctionnement en poussée directe en évitant les pertes aérodynamiques, que lors du fonctionnement en inversion de poussée en ménageant un pilotage adéquat des nappes du flux inversé. L'invention vise enfin particulièrement, en plus des choix technologiques assurant la fiabilité du matériel, à répondre de manière optimale aux conditions de sécurité en éliminant un risque d'ouverture intempestive d'éléments déplaçables tels que les portes d'inverseur en cas de déverrouillage accidentel.

Ces buts sont atteints, conformément à l'invention, par un inverseur de poussée à portes pivotantes du type précité caractérisé en ce que le point d'application dudit vérin qui est disposé en position de jet direct de l'inverseur entre ladite porte et ledit panneau amont interne est situé sur la porte, les inclinaisons desdits panneau amont et élément interne de porte, en position d'inversion de flux, associées au dispositif de déflecteur à partie frontale disposée sur le rebord amont de porte permettant un pilotage des nappes du flux inversé et que en position de jet direct ledit panneau amont interne se raccorde avec interposition de moyens d'étanchéité d'une part, à l'avant sur la partie fixe amont de l'inverseur et d'autre part,à l'arrière sur le bord arrière de la partie amont de l'élément interne de porte, la cavité amont formée entre ledit panneau amont interne et la partie interne de porte étant ainsi portée à la pression ambiante qui est inférieure à la pression de la veine s'exerçant sur la partie aval de l'élément interne de porte de telle sorte que, compte-tenu de la position déterminée des pivots, des efforts dans le sens de l'auto-fermeture s'exercent positivement sur ladite porte, la position fermée de la porte devenant une position stable.

D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermées, d'un type connu et qui a fait précédemment l'objet d'une description ;
- la figure 2 représente une vue schématique en perspective d'un inverseur de poussée du type précité montré en position monté et avec les portes fermées ;
- la figure 3 représente, dans une vue analogue à celle de la figure 1 un inverseur de poussée à portes pivotantes, en position fermées, selon un mode de réalisation de l'invention ;
- la figure 4 représente, dans une vue analogue à celle de la figure 3, le plan de coupe étant décalé, l'inverseur de poussée représenté sur la figure 3 comportant des moyens de liaison d'un panneau amont interne à la porte d'inverseur ;
- la figure 5 représente, dans une vue schématique analogue à celles des figures 1 et 3, l'inverseur de poussée conforme à l'invention dans une position d'inversion de poussée, montrant la position des portes et panneaux mobiles.

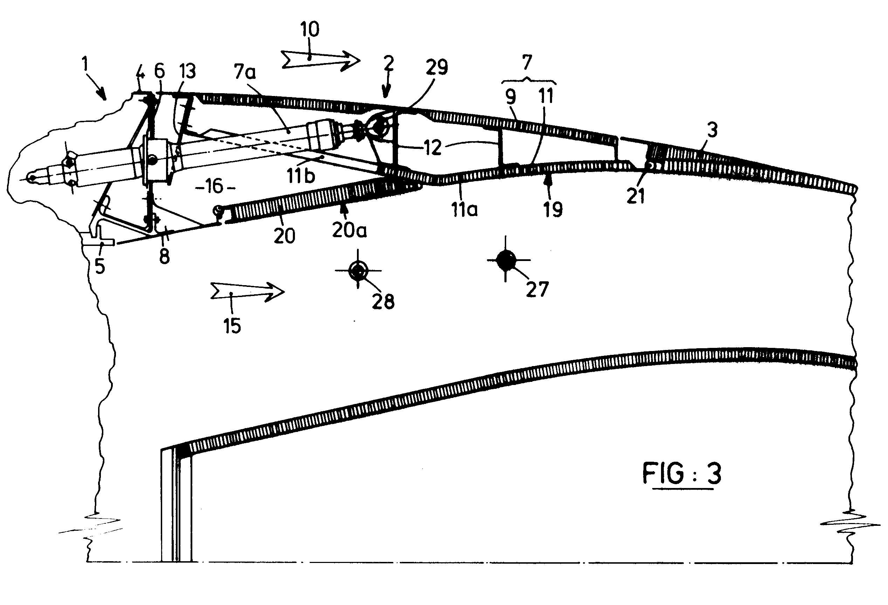

Selon un mode de réalisation de l'invention représenté sur la figure 3, un inverseur de poussé susceptible d'effectuer dans les phases de vol pertinentes d'un avion l'inversion du flux secondaire d'un turboréacteur associé à double flux, comporte les ensembles et pièces qui ont été précédemment décrits en référence à la figure 1 dans un exemple connu de réalisation et on conservera les mêmes références de ces éléments lorsqu'ils sont identiques ou correspondants. L'inverseur de poussée comporte ainsi la partie fixe amont 1 composée du panneau externe 4 de nacelle, du panneau externe 5 de veine du flux secondaire représenté par la flèche 15, panneau dont l'extrémité aval est prolongée par le bord de déviation 8 et du cadre avant 6 formant le support du vérin 7a, puis la partie mobile 2 constituée des portes 7, chacune composée d'un élément externe 9 constituant la paroi de délimitation aérodynamique du flux extérieur au moteur représenté par la flèche 10 lorsque la porte 7 est en position fermée, d'un élément interne 11, de la structure intérieure 12 et de l'ensemble des déflecteurs comportant notamment le déflecteur frontal 13 et enfin le cône arrière fixe 3.

Dans la position fermée de la porte 7, correspondant au fonctionnement en poussée directe de l'inverseur de poussée, la surface théorique 14, représentée à la figure 1 de l'exemple connu et correspondant à l'enveloppe aérodynamique continue théorique de la veine du flux secondaire est matérialisée, entre la face interne du panneau 5, en amont, et la face interne du cône arrière fixe 3, en aval, d'une part, par la surface interne 19 de la partie aval 11a de l'élément interne 11 de porte et, d'autre part, par la surface interne 20a d'un panneau amont interne 20 qui double la partie amont 11b de l'élément interne 11 de porte en fermant ainsi du côté interne la cavité amont 16 ménagée entre ledit panneau 20 et la porte 7.

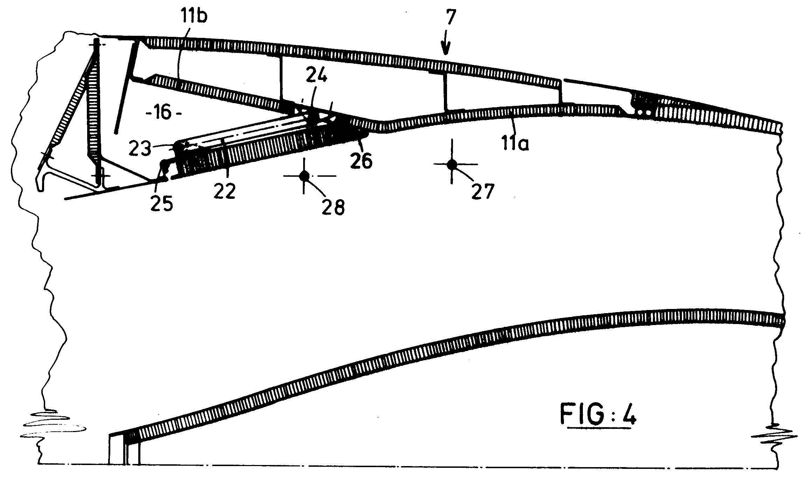

De manière remarquable et conforme à l'invention, le joint d'étanchéité 17 représente sur l'exemple antérieur de la figure 1 et disposé entre le bord amont de la porte 7 et la structure fixe amont 1 de l'inverseur a été supprimé, mettant ainsi la cavité 16 en relation avec la pression ambiante extérieure. Par contre du côté aval, un joint d'étanchéité 21 est maintenu entre le bord arrière de la partie aval 11a de l'élément interne 11 de porte et le cône arrière 3. Le montage du panneau amont interne 20 est schématiquement représenté sur la figure 4. Une biellette 22 relie une articulation 23 solidaire dudit panneau 20 et une articulation 24 solidaire de la partie amont 11b de la partie interne 11 de porte. Un joint d'étanchéité 25 est interposé entre le bord amont dudit panneau 20 et la structure fixe amont 1 et de même un joint d'étanchéité 26 est également interposé entre le bord aval dudit panneau 20 et la zone de raccordement sur le bord arrière de la partie amont 11b de la partie interne 11 de porte, de telle sorte que dans la position correspondant au fonctionnement en poussée directe de l'inverseur représentée sur la figure 4, la partie interne amont 11b de la porte 7 est soumise à une pression ambiante qui règne dans la cavité 16 tandis que la pression de la veine fluide circulant dans le canal annulaire de l'inverseur s'exerce sur la face interne de la partie interne aval 11a de la porte 7.

De manière connue en soi, chaque porte 7 est supportée sur ses bords latéraux par un pivot fixe 27 porté par la structure fixe de l'inverseur, notamment par le bord d'une poutre longitudinale 18 telle que représentée sur la figure 2. De manière analogue, le panneau amont interne 20 associé à chaque porte 7 est supporté par un pivot indépendant fixe 28 également porté par la structure fixe. Ces pivots 27 et 28 sont associés de manière connue à des ferrures de support, de part et d'autre, selon des modalités qui n'ont pas été représentées en détails sur les dessins.

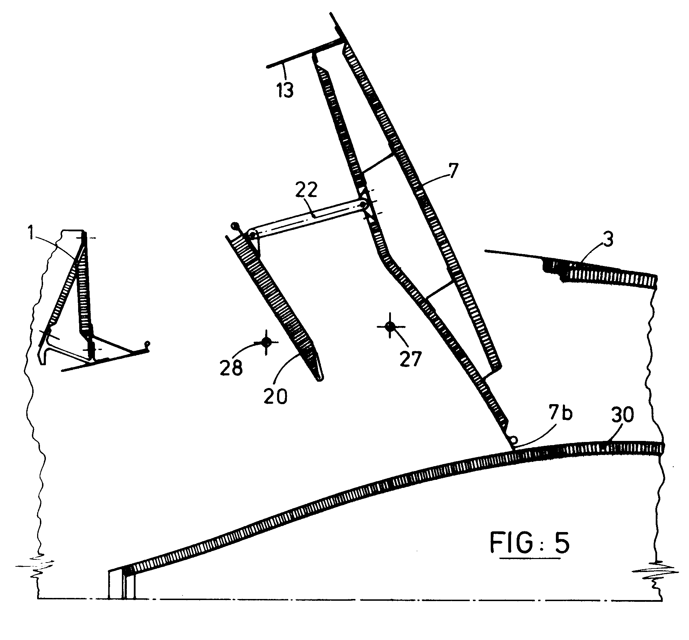

On va donner, en référence à la figure 5, une description sommaire du fonctionnement de l'inverseur de poussée qui vient d'être décrit en référence aux figures 3 et 4. Pour passer de la position fermée de la porte 7 d'inverseur, telle que représentée sur les figures 3 et 4 et correspondant à un fonctionnement en poussée directe à une ouverture de la porte 7, représentée sur la figure 5 correspondant à la fermeture du canal secondaire et à une inversion de poussée, le vérin 7a, actionné par un système de commande, d'un type connu en soi et non représenté sur les dessins, par déplacement de son articulation 29 sur la porte 7, représentée sur la figure 3, fait pivoter ladite porte autour de ses pivots 27 jusqu'à ce que le bord aval 7b de la porte vienne rejoindre la surface de l'enveloppe interne 30 du canal annulaire de la veine secondaire du flux. Dans ce mouvement de pivotement la porte 7 entraîne par l'intermédiaire de la biellette 22 le panneau amont 20 qui pivote autour de ses propres pivots 28 de manière à ménager de part et d'autre du panneau 20 des canaux de passage du flux inversé.

L'orientation du flux notamment assurée par le déflecteur frontal 13 de la porte 7 déviant le jet vers l'avant est amélioré grâce au pilotage des nappes du flux inversé qui est ainsi assuré par le panneau 20 grâce à diverses dispositions complémentaires adaptées aux résultats recherchés en fonction des applications particulières.

Ces résultats sont notamment influencés par le choix des positions respectives des pivots 27 de porte et 28 de panneau et par le profil particulier, notamment sur sa face externe, donné au panneau 20.

En se reportant à la figure 4, dans la position du fonctionnement en poussée directe, on relèvera en outre un avantage important de l'invention. En effet, comme noté précédemment, par suite de l'absence de joint d'étanchéité au bord avant de la porte 7, mais de la présence par contre de tels joints 25 et 26 aux bords du panneau interne amont 20, un déséquilibre des efforts s'exerçant sur la porte 7 est créé. Les efforts de pression interne de la veine fluide s'exerçant sur la partie interne aval 11a de la porte 7 ne sont pas compensés par des efforts s'exerçant sur la partie amont 11b du fait que la cavité 16 se trouve à la pression ambiante. Il en résulte une tendance à l'auto-fermeture de la porte 7 dont la position fermée est stable, évitant ainsi tout risque d'ouverture intempestive en cas de déverrouillage accidentel, ou dans le cas de rupture, ladite porte étant par ailleurs équipée des dispositifs habituels de verrouillage/déverrouillage.

On note également que la répartition ainsi obtenue des pressions sur la partie amont 11b et sur la partie aval 11a de l'élément interne 11 de porte permet une réduction des charges et une réduction de l'effort demandé au vérin 7a, ce qui permet un dimensionnement réduit et une diminution avantageuse de l'encombrement.

## Revendications

1. Inverseur de poussée de turboréacteur à double flux comportant des portes pivotantes (7) susceptibles, en position fermée, de s'intégrer dans la paroi extérieure du canal annulaire du flux secondaire, constituées d'un élément externe (9) et d'un élément interne (11) formant deux parois reliées par des raidisseurs (12), la partie amont (11b) de chaque porte (7) étant doublée sur sa face interne par un panneau amont interne (20), la porte (7) et ledit panneau (20) étant reliés l'un à l'autre par des moyens de liaison comportant au moins une biellette (22), les points d'articulation (23,24) à chaque extrémité de ladite biellette, la longueur de biellette (22) et l'emplacement desdits pivots (27,28) de porte et de panneau étant déterminés de manière que en position d'inversion de flux un passage est ménagé entre l'élément interne (11) de porte (7) et ledit panneau (20) et étant susceptibles chacun de pivoter autour de pivots latéraux indépendants (27,28) portés par la structure fixe de l'inverseur sous l'action d'un moyen de commande des déplacements tels qu'un vérin (7a) caractérisé en ce que le point d'application dudit vérin (7a) qui est disposé en position de jet direct de l'inverseur entre ladite porte (7) et ledit panneau amont interne (20) est situé sur la porte (7), les inclinaisons desdits panneau amont et élément interne de porte, en position d'inversion de flux, associées au dispositif de déflecteur à partie frontale (13) disposée sur le rebord amont de porte, permettent un pilotage des nappes du flux inversé et que en position de jet direct ledit panneau amont interne (20) se raccorde avec interposition de moyens d'étanchéité (25,26), d'une part, à l'avant sur la partie fixe amont (1) de l'inverseur et d'autre part, à l'arrière sur le bord arrière de la partie amont (11b) de l'élément interne (11) de porte, la cavité amont (16) formée entre ledit panneau amont interne (20) et la partie interne amont (11b) de porte étant ainsi portée à la pression ambiante qui est inférieure à la pression de la veine s'exerçant sur la partie aval (11a) de l'élément interne (11) de porte de telle sorte que, compte-tenu de la position déterminée des pivots (27,28), des efforts dans le sens de l'auto-fermeture s'exercent positivement sur ladite porte (7), la position fermée de la porte (7) devenant une position stable.

## Patentansprüche

1. Schubumkehrvorrichtung für ein Mantelstrom-Strahltriebwerk mit Schwenkklappen (7), die sich in geschlossener Position in die Außenwandung des ringförmigen Kanals der Sekundärströmung integrieren können und die jeweils aus einem äußeren Element (9) und einem inneren Element (11) bestehen, die zwei durch Verstärkungen (12) miteinander verbundene Wandungen bilden, wobei der stromaufwärtige Teil (11b) jeder Klappe (7) auf seiner Innenseite mit einer stromaufwärtigen inneren Platte (20) ausgekleidet ist, wobei diese Platte (20) und die Klappe (7) durch die Wirkung einer Bewegungssteuerungsvorrichtung, wie eines Arbeitszylinders (7a), jeweils um unabhängige, von der festen Struktur der Schubumkehrvorrichtung getragene seitliche Gelenkzapfen (27, 28) verschwenkbar sind und über Verbindungsmittel miteinander verbunden sind, die wenigstens eine Triebstange (22) umfassen, wobei die Gelenkpunkte (23, 24) an den Enden dieser Triebstange, ferner die Länge der Triebstange (22) sowie die räumliche Anordnung der genannten Gelenkzapfen (27, 28) der Klappe und der Platte so festgelegt sind, daß in Strömungsumkehrposition zwischen dem inneren Element (11) der Klappe (7) und der genannten Platte (20) ein Durchgang gebildet wird, **dadurch gekennzeichnet,** daß der Angriffspunkt des Arbeitszylinders (7a), der in der Direktschubposition der Schubumkehrvorrichtung zwischen der Schwenkklappe (7) und der genannten stromaufwärtigen inneren Platte (20) angeordnet ist, auf der Schwenkklappe (7) liegt, wobei die in Strömungsumkehrposition der Platte (20) und des inneren Elements der Schwenkklappe der Deflektorvorrichtung an dem auf der vorderen Randleiste angeordneten frontalen Teil (13) der Schwenkklappe zugeordneten Neigungen eine Lenkung der Schichten der umgekehrten Strömung erlauben, und daß die innere Platte (20) sich in der Direkt- schubposition unter Zwischenfügung von Dichtungsmitteln (25, 26) einerseits vorn an den festen stromaufwärtigen Teil (1) der Schubumkehrvorrichtung und andererseits hinten an den hinteren Rand des stromaufwärtigen Teils (11b) des inneren Elements (11) der Schwenkklappe anschließt, wobei der zwischen der stromaufwärtigen inneren Platte (20) und dem stromaufwärtigen inneren Teil (11b) der Schwenkklappe gebildete Hohlraum (16) auf den Umgebungsdruck gebracht wird, der niedriger ist als der in dem Strömungskanal herrschende Druck, der auf den stromabwärtigen Teil (11a) des inneren Elements (11) der Schwenkklappe ausgeübt wird, so daß unter Berücksichtigung der festgelegten Position der Gelenkzapfen (27, 28) selbstätig Kräfte in Schließrichtung positiv auf die Schwenkklappe (7) einwirken und die Schließposition der Schwenkklappe (7) eine stabile Position wird.

## Claims

1. Bypass turboreactor engine thrust reverser comprising pivoting shutters (7) able, in the closed position, to integrate themselves in the outer wall of the annular duct of the secondary airstream, made up of an outer element (9) and an inner element (11) forming two walls connected by stiffeners (12), the upstream part (11b) of each shutter (7) being duplicated on its inner face by an inner upstream panel (20), the shutter (7) and the said panel (20) being linked together by means of linkage comprising at least one connecting link (22), articulation points (23, 24) at each end of the said connecting link, the length of the link (22) and the position of the said shutter and panel pivots (27, 28) being determined in such a way that in the reverse thrust position a passage is formed between the inner element (11) of the shutter (7) and the said panel (20) and being each able to pivot around independent lateral pivots (27, 28) carried on the fixed structure of the thrust reverser under the action of a means of controlling movement such as a ram (7a) characterised in that the point of application of the said ram (7a), which with the thrust reverser in direct thrust position is placed between the said shutter (7) and the said inner upstream panel (20), is situated on the shutter (7), the angles of the said upstream panel and inner shutter element, in the reverse thrust position, associated with the shutter deflector device with a frontal part (13) placed on the upstream rebate, permitting guidance of the layers of reversed flow and that in the direct thrust position the said inner upstream panel (20) joins up, with the interposition of seals (25, 26) on the one hand, at the front with the upstream fixed part (1) of the thrust reverser and, on the other, at the rear with the rear edge of the upstream part (11b) of the inner shutter element (11), the upstream cavity (16) formed between the said inner upstream panel (20) and the upstream inner shutter part (11b) being thus brought to ambient pressure, which is lower than the pressure of the airstream acting on the downstream part (11a) of the inner shutter element (11) in such a way that, taking into account the positions determined for the pivots (27, 28), forces acting in a self-closing direction act positively on the said shutter (7), the closed position of the shutter (7) becoming a stable position.
